Europäisches Patentamt

European Patent Office

Office européen des brevets

(11) Numéro de publication: **0 274 963 B1**

# FASCICULE DE BREVET EUROPEEN

(45) Date de publication de fascicule du brevet:
07.08.91

(51) Int. Cl.⁵: **F16K 15/14, A62B 17/00**

(21) Numéro de dépôt: 87420017.3

(22) Date de dépôt: **16.01.87**

(54) **Soupape à membrane à ouverture rapide, notamment pour un vêtement de sécurité.**

(43) Date de publication de la demande:
**20.07.88 Bulletin 88/29**

(45) Mention de la délivrance du brevet:
**07.08.91 Bulletin 91/32**

(84) Etats contractants désignés:
**BE DE FR GB**

(56) Documents cités:

| | |
|---|---|
| CH-A- 316 770 | FR-A- 688 098 |
| FR-A- 995 553 | FR-A- 1 473 128 |
| FR-A- 1 545 165 | US-A- 2 446 571 |
| US-A- 2 693 180 | US-A- 3 891 000 |

(73) Titulaire: **Grizard, Jean**
**Sourcieux Les Mines**
**F-69210 L Arbresle(FR)**

Titulaire: **Delorme, Francis**
**Tavel**
**F-30150 Roquemaure(FR)**

(72) Inventeur: **Grizard, Jean**
**Sourcieux Les Mines**
**F-69210 L Arbresle(FR)**
Inventeur: **Delorme, Francis**
**Tavel**
**F-30150 Roquemaure(FR)**

(74) Mandataire: **Arbousse-Bastide, Jean-Claude**
**Philippe**
**Cabinet Maisonnier 28 rue Servient**
**F-69003 Lyon(FR)**

## Description

La présente invention est relative à une soupape à membrane comme définie dans le préambule de la revendication 1 et connue du FR-A-688 098, destinée à assurer un effet antiretour sur un circuit gazeux , et notamment sur un circuit d'air à faible pression . Elle concerne plus particulièrement , quoique non exclusivement , une soupape à membrane destinée à équiper un vêtement protecteur de sécurité , du genre de ceux qu'utilise le Personnel , par exemple dans les industries chimiques ou nucléaires.

On sait qu'un tel vêtement de protection se présente sous la forme d'une combinaison souple étanche dont la ventilation intérieure est assurée , pour permettre à l'utilisateur de respirer normalement . On prévoit donc :

- d'une part , une arrivée d'air frais , sous faible pression ;
- d'autre part , une soupape d'échappement , pour permettre la sortie de l'air vicié , tout en interdisant la rentrée de l'atmosphère extérieure et des impuretés ou particules radioactives qu'elle peut contenir.

Une telle soupape à membrane peut être réalisée sous diverses formes connues , par exemple avec des moyens de rappel élastiques (voir US-A-2693180), notamment un jonc souple ou analogue.

Une soupape à membrane de type connu présente divers inconvénients , liés au fait qu'elle est pourvue de moyens d'ouverture et de rappel en position de fermeture , qui introduisent à l'échappement une perte de charge relativement importante . Il en est ainsi , lorsque la soupape comporte deux joues souples superposées , avec , entre elles , un jonc élastique qui les rappelle à plat l'une contre l'autre . Dès lors , lorsque la pression d'air devient prépondérante entre les deux joues , elle les écarte , ce qui a pour effet de bander davantage le jonc à ressort . Plus les deux joues s'écartent pour laisser passer un plus fort débit d'air vicié , plus le jonc élastique est tendu . Ainsi , lorsque l'utilisateur fournit un effort musculaire , sa respiration devient plus rapide et le débit d'air consommé s'accroît. Ainsi , plus le travail est pénible , plus la respiration de l'utilisateur devient pénible .

La présente invention a pour but de réaliser une soupape souple antireretour , qui , une fois ouverte , ne fait apparaître sur le flux d'air évacué , aucune perte de charge résistante appréciable .

Une soupape à membrane selon l'invention comme définie dans la revendication 1 comporte deux éléments plans désignés sous le nom de joues souple ou membranes , dont l'un est percé d'un orifice amont , ces éléments étant solidaires l'un de l'autre de façon étanche par une partie de leur périphérie commune , sauf le long d'au moins un bord libre , et elle est caractérisée en ce que , au voisinage du bord libre , chacune des joues souples est pourvue d'une barrette déformable , les deux barrettes étant situées l'une en face de l'autre et pourvues de moyens magnétiques qui les rappellent spontanément l'une contre l'autre , mais qui les laissent s'écarter l'une de l'autre sous l'action d'un effort d'amplitude supérieure à celle d'un seuil donné de façon à définir une ouverture aval entre les deux barrettes formant une paire .

Suivant une autre caractéristique de l'invention , chaque joue souple a deux bords libres situés de part et d'autre de l'orifice amont , si bien que la soupape comporte deux paires de barrettes de rappel susceptibles de s'écarter pour définir deux ouvertures aval .

Suivant une autre caractéristique de l'invention , chaque barrette est en une matière aimantée souple , les polarités étant choisies pour que les deux barrettes d'une même paire s'attirent .

Le dessin annexé , donné à titre d'exemple non limitatif , permettra de mieux comprendre l'invention et les avantages qu'elle est susceptible de prouver .

Fig . 1 montre en perspective et en position de fermeture , une soupape selon l'invention à une seule paire de barrettes de rappel .

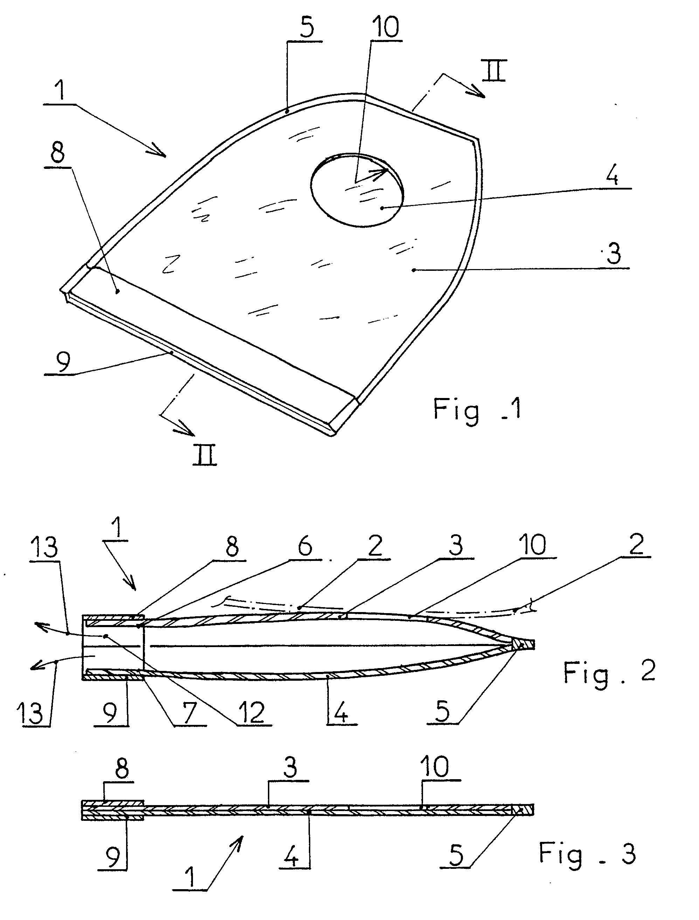

Fig . 2 est une coupe suivant II-II (Fig. 1) .

Fig . 3 est une coupe analogue en position d'ouverture .

Fig . 4 montre une soupape selon l'invention comportant deux paires de barrettes et fixée en position fermée sur la paroi d'une combinaison souple .

Fig . 5 est une coupe suivant V-V (Fig . 4) .

Fig . 6 est une perspective en coupe analogue pour un mode de fixation différent .

Fig . 7 correspond à la Fig . 4 en position d'ouverture .

Fig . 8 est une coupe suivant VIII-VIII (Fig . 7) .

Fig . 9 montre uhe combinaison souple de sécurité équipée d'une soupape selon l'invention .

L'invention concerne une soupape à membrane 1 qui est destinée par exemple à équiper une combinaison étanche souple 2 d'un type en lui-même connu . On sait qu'une telle combinaison est pourvue d'une arrivée d'air frais (non représentée) . L'air vicié est évacué vers l'extérieur par la soupape 1 qui doit par contre interdire toute rentrée depuis l'atmosphère environnante .

La soupape 1 illustrée sur les Fig . 1 à 3 comprend deux éléments plans ou joues souples 3 et 4 qui sont solidaires l'un de l'autre de façon étanche par une partie 5 de leur bord périphérique (en forme de U sur la Fig . 1) . Elles sont soudées l'une à l'autre le long de cette partie 5 . Par contre , elles ont chacune un bord libre , respectivement 6 et 7 . Au voisinage de ce bord libre , chaque joue 3 , 4 est pourvue d'une barrette magnétique déformable , respectivement 8 et 9 dont elle est solidaire .

Par ailleurs , la joue 3 est découpée suivant un orifice amont 10 dont le pourtour vient se fixer de façon étanche sur la paroi de la combinaison 2 , découpée elle aussi à cet endroit.

La fixation de l'orifice 10 sur la paroi souple de la combinaison 1 peut s'effectuer par tout moyen connu , notamment :

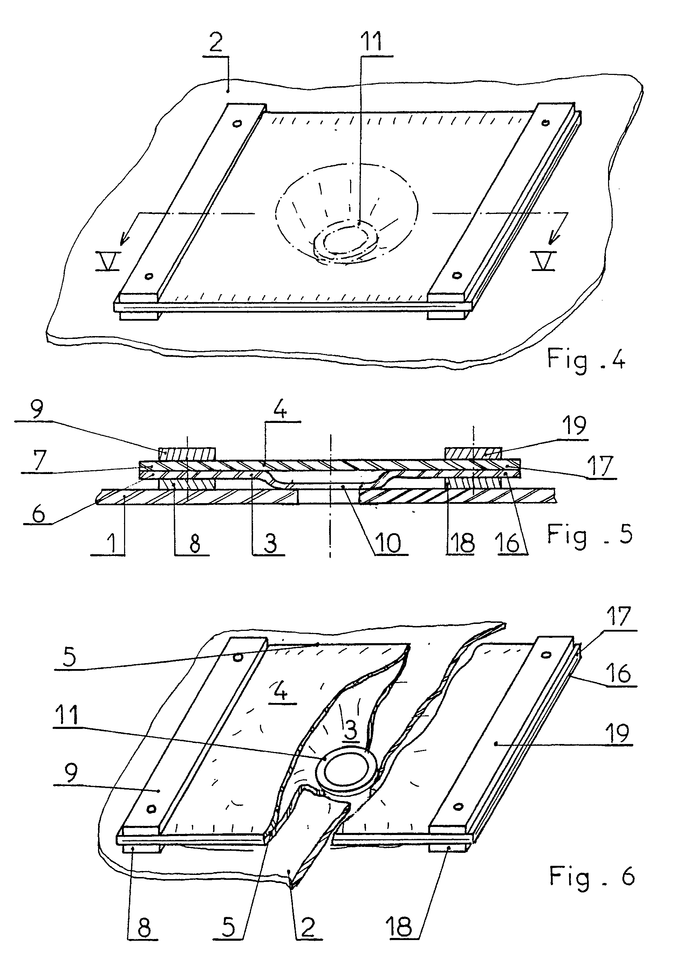

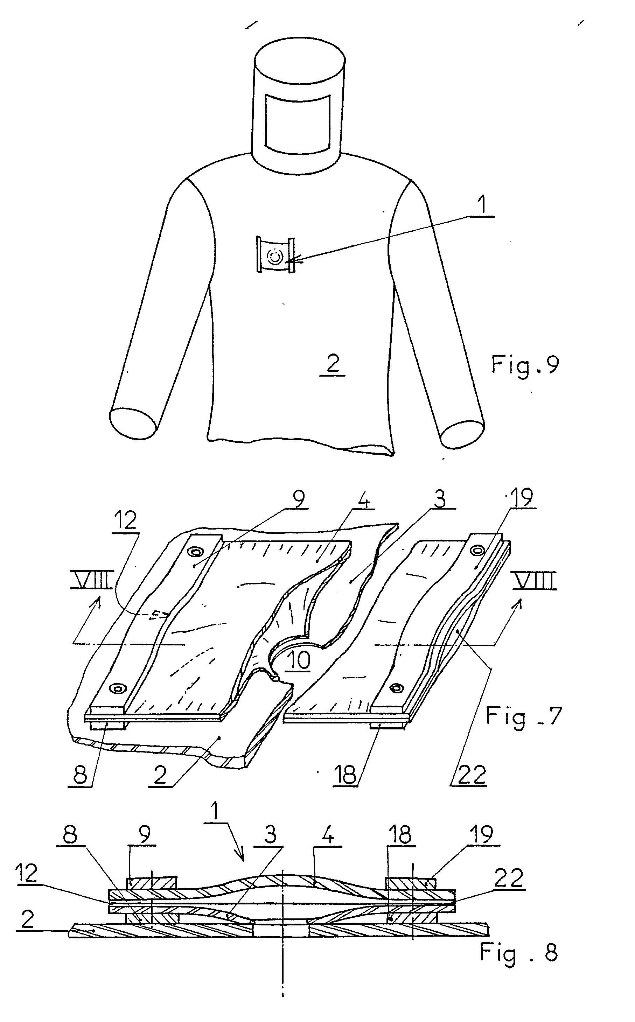

- par sondage ou collage (cas des figures 2 , 5 , 7 , 8) ;
- ou bien par serrage à l'aide d'un oeillet 11 vissé ou serti (cas des figures 4 et 6) .

Le fonctionnement est le suivant :

- en position de repos , la soupape 2 est fermée de façon étanche par les deux barrettes 8 et 9 (Fig . 1 et 3) maintenues serrées l'une contre l'autre par l'attraction magnétique .

Par contre , si la pression d'air monte à l'intérieur de la combinaison 1 , elle monte aussi entre les deux joues 3 et 4 : la soupape se gonfle . Il en résulte l'apparition d'une force qui a tendance à écarter les deux barrettes 8 et 9 , sans y parvenir . Par contre , dès que cette force dépasse un seuil défini par l'attraction magnétique , elle devient prépondérante : les bords libres 6 et 7 s'écartent , définissant entre eux une ouverture aval 12 (Fig . 2) par où l'air s'échappe vers l'extérieur (flèches 13) . L'attraction magnétique décroissant entre les barrettes 8 et 9 proportionnellement au carré de leur écartement , cette attraction n'augmente pratiquement plus quand la section de l'ouverture 12 augmente . Autrement dit , une fois amorcé l'écartement des bords libres 6 et 7 , la perte de charge tendant à s'opposer au débit d'air n'augmente pas quand on écarte davantage les barrettes 8 et 9 .

Dans la variante des Fig . 4 et 8 , chaque joue 3 , 4 a un contour sensiblement carré ou rectangulaire . Elle comporte deux bords libres opposés, respectivement 6 et 16 pour la joue 3 , 7 et 17 pour la joue 4 .

Deux barrettes magnétiques souples 18 et 19 équipent les bords 16 et 17 , de la même façon que les barrettes 8 et 9 prévues sur les bords 6 et 7 .

Le Fonctionnement est le suivant :

- dès que dans la soupape 1 gonflée (Fig . 7 et 8) la pression devient prépondérante , les deux paires de barrettes 8 , 9 et 18 , 19 s'écartent pour laisser apparaître deux ouvertures aval d'échappement 12 et 22 . Ainsi , la section de passage offerte à l'air vicié se trouve encore augmentée , sans accroître pour autant la résistance à l'écoulement .

## Revendications

1. Soupape à membrane comportant deux joues souples planes (3, 4) dont l'une est percée d'un orifice amont (10) , ces joues étant solidaires l'une de l'autre de façon étanche par une partie (5) de leur périphérie commune , sauf le long d'au moins un bord libre (6 , 7) , caractérisée en ce que , au voisinage du bord libre (6 , 7) , chacune des joues est pourvue d'une barrette déformable (8 , 9) , les deux barrettes étant situées l'une en face de l'autre et pourvues de moyens magnétiques qui les rappellent spontanément l'une contre l'autre , mais qui les laissent s'écarter l'une de l'autre sous l'action d'un effort d'amplitude supérieure à celle d'un seuil donné de façon à définir une ouverture aval (12) entre les deux barrettes formant une première paire .

2. Soupape à membrane suivant la revendication 1 , caractérisée en ce que chaque joue souple (3 , 4) a deux bords libres respectivement (6 , 16) et (7 , 17) situés de part et d'autre de l'orifice amont (10) si bien que la soupape comporte deux paires de barrettes (8 , 9 et 18 , 19) susceptibles de s'écarter pour définir deux ouvertures aval (12 , 22) .

3. Soupape à membrane suivant l'une quelconque des revendications précédentes , caractérisée en ce que chaque barrette (8 , 9 18 , 19) est en une matière aimantée souple , les polarités étant choisies pour que les deux barrettes d'une même paire (8 , 9 et 18 , 19) s'attirent.

4. Soupape à membrane suivant l'une quelconque des revendications précédentes , caractérisée en ce qu'elle a un contour rectangulaire .

5. Soupape à membrane suivant l'une quelconque des revendications 1 à 3 , caractérisée en ce qu'elle a un contour carré .

## Claims

1. Membrane valve comprising two flat flexible cheeks (3, 4), one of which is pierced with an upstream orifice (10), these cheeks being fixed sealingly together by a part (5) of their common periphery, except along at least one free edge (6, 7), characterized in that, in the vicinity of the free edge (6, 7), each of the cheeks is provided with a deformable bar (8, 9), the two bars being situated facing each other and having magnetic means which return them spontaneously one against the other, but which let them move away from each other under the action of a force of an amplitude greater than that of a given threshold so as to define a downstream opening (12) between the two bars forming a first pair.

2. Membrane valve according to claim 1, characterized in that each flexible cheek (3, 4) has two free edges respectively (6, 16 and 7, 17) situated on each side of the upstream orifice (10) so that the valve has two pairs of bars (8, 9 and 18, 19) able to move apart and define two downstream openings (12, 22).

3. Membrane valve according to any one of the preceding claims, characterized in that each bar (8,9, 18, 19) is made from a flexible magnetized material, the polarities being chosen so that the two bars of the same pair (8, 9 and 18, 19) are attracted to each other.

4. Membrane valve according to any one of the preceding claims, characterized in that it has a rectangular contour.

5. Membrane valve according to any one of claims 1 to 3, characterized in that it has a square contour.

**Patentansprüche**

1. Membranventil mit zwei flachen, flexiblen Seitenwänden (3, 4), von denen eines mit einer Eintrittsöffnung (10) versehen ist und beide Seitenwände auf ihrer Außenseite (5) mit Ausnahme mindestens einem freien Rand (6, 7) dichtschließend miteinander verbunden sind, **dadurch gekennzeichnet,** daß in der Nähe des freien Randes (6, 7) jede der Seitenwände mit einem verformbaren Bügel (8, 9) versehen ist, wobei die beiden Bügel sich gegenüberliegen und mit magnetischen Mitteln versehen sind durch die sie spontan aneinandergepreßt, jedoch bei einer Kraftanwendung über einer bestimmten Schwelle auseinander gedrückt werden, sodaß eine Austrittsöffnung (12) zwischen den beiden, ein erstes Paar bildenden Bügeln entsteht.

2. Membranventil nach Patentanspruch 1, **dadurch gekennzeichnet,** daß jede der flexiblen Seitenwände (3, 4) zwei freie Ränder (6, 16 und 7, 17) links und rechts der Eintrittsöffnung (10) und das Ventil somit zwei Bügelpaare (8, 9 und 18, 19) besitzt, bei deren Auseinanderdrücken zwei Austrittsöffnungen (12, 22) entstehen.

3. Membranventil nach einem beliebigen der obigen Patentansprüche, **dadurch gekennzeichnet,** daß jeder der Bügel (8, 9, 18, 19) aus flexiblem magnetischem Material besteht und deren Polarität so gewählt ist, daß die beiden Bügel ein und desselben Paares (8, 9 bzw. 18, 19) sich gegenseitig anziehen.

4. Membranventil nach einem beliebigen der obigen Patentansprüche, **dadurch gekennzeichnet,** daß es einen rechteckigen Umriß hat.

5. Membranventil nach einem beliebigen der obigen Patentansprüche, **dadurch gekennzeichnet,** daß es einen quadratischen Umriß hat.

Fig .1

Fig . 2

Fig . 3

Fig . 4

Fig . 5

Fig . 6

Fig.9

Fig .7

Fig . 8